(19) Europäisches Patentamt
European Patent Office
Office européen des brevets

(11) EP 4 245 805 B1

(12) EUROPEAN PATENT SPECIFICATION

(45) Date of publication and mention of the grant of the patent:
**18.09.2024 Bulletin 2024/38**

(21) Application number: **22163017.1**

(22) Date of filing: **18.03.2022**

(51) International Patent Classification (IPC):
***C08L 23/04*** *(2006.01)* ***C08L 23/08*** *(2006.01)*
***C08F 210/16*** *(2006.01)*

(52) Cooperative Patent Classification (CPC):
(C-Sets available)
**C08L 23/04; C08F 210/16; C08L 23/0815;**
C08L 2203/16; C08L 2205/025; C08L 2207/062;
C08L 2207/20 (Cont.)

# (54) POLYETHYLENE BLEND FOR A FILM LAYER

POLYETHYLENMISCHUNG FÜR EINE FOLIENSCHICHT

MÉLANGE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2023 Bulletin 2023/38**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **POTTER, Elisabeth**
  **4021 Linz (AT)**
- **AHO, Jani**
  **06101 Porvoo (FI)**

(74) Representative: **TBK**
**Bavariaring 4-6**
**80336 München (DE)**

(56) References cited:
**EP-A1- 3 800 221**
**WO-A1-2021/074785**
**WO-A1-2021/122299**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/65927;**
**C08L 23/04, C08L 23/0815, C08L 23/0815, C08L 23/0815;**
**C08L 23/0815, C08L 23/0815, C08L 23/0815;**
C08F 210/16, C08F 210/08, C08F 2500/07, C08F 2500/12

## Description

The present invention relates to a composition comprising a multimodal high density polyethylene (HDPE) and a mixed-plastic-polyethylene recycling blend, to the use of the composition in film applications and to a film comprising the polymer composition of the invention.

Polyolefins, in particular polyethylene and polypropylene are increasingly consumed in large amounts in a wide range of applications, including packaging for food and other goods.

Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

It is thus important to form a circular economy that brings plastic waste back to a second life, i.e., to recycle it. This not only avoids leaving plastic waste in the environment but also recovers its value.

In addition, the European Commission confirmed in 2017 that it would focus on plastics production and use. The EU goals are that 1) by 2025 at least 55 % of all plastics packaging in the EU should be recycled and 2) by 2030 all plastic packaging placed in the EU market is reusable or easily recycled. This pushes the brand owners and plastic converters to pursue solutions with recyclate or virgin/recyclate blends.

Thus, there is an increasing importance to include polymers obtained from waste materials for the manufacturing of new products, i.e. wherein waste plastics (e.g. post-consumer recyclate (PCR)) can be turned into resources for new plastic products. Hence, environmental and economic aspects can be combined in recycling and reusing waste plastics material. However, recycled plastics are normally inferior to virgin plastics in their quality due to degradation, contamination and mixing of different plastics.

In addition, compositions containing recycled polyolefin materials normally have properties, which are much worse than those of the virgin materials, unless the amount of recycled polyolefin added to the final composition is extremely low. For example, such materials often have limited impact strength and poor mechanical properties and thus, they do not fulfil customer requirements.

Blending recycled plastics with virgin plastics is a common practice of improving the quality of recycled plastics.

WO 2021122299 for example describes recycled polyethylene solutions for wire and cable applications, especially for jacketing materials, which have acceptable and constant ESCR (Environmental Stress Crack Resistance) performance (e.g. tensile properties), with Bell test failure time >1000 hours and good strain hardening (SH) performance with a strain hardening (SH) modulus of at least 15.0 MPa with other properties which are similar to blends of virgin polyethylene marketed for the purpose of cable jacketing.

Such solutions are based on blends of recycled LDPE and virgin HDPEs, which are suitable for being used in the wire and cable field. One example is HE6063, a bimodal HDPE jacketing compound for energy and communication cables (available from Borealis AG) made with Borstar bimodal process technology with density of 946 kg/m$^3$ and $MFR_2$ (ISO 1133, 190°C, 2.16 kg) of 0.55 g/10 min.

Based on this it was one objective of the present invention to provide a polyethylene based composition allowing the use of recycled LDPE, which can be used for producing films with good properties, especially good mechanical properties such as impact and stiffness and improved optics, especially haze.

In addition, it should be possible to add higher amounts of recyclate into the composition.

The inventors have now found that a blend of a multimodal high density polyethylene (HDPE) having a specific polymer design and a major part of a LDPE recyclate (i.e. a mixed-plastic-polyethylene recycling blend), provides films with an improved balance between stiffness, impact and optics, i.e. haze.

## Description of the invention

The present invention is therefore directed to a composition comprising

(I) 1.0 to 49.0 wt% based on the total composition, of a multimodal high density polyethylene (HDPE), wherein the multimodal HDPE has a density (ASTM D792) in the range of 948 to 970 kg/m$^3$ and a $MFR_2$ (190°C, 2.16 kg, ISO 1133) of 0.1 to 3.0 g/10 min and wherein the multimodal HDPE comprises at least

(i) 30 to 70 wt%, relative to the total weight of the multimodal HDPE, of a polyethylene component (A) with a density (ASTM D792) in the range of 955 to 980 kg/m$^3$ and an $MFR_2$ (190°C, 2.16 kg, ISO 1133) of 10 to 1000 g/10 min; and

(ii) 30 to 70 wt%, relative to the total weight of the multimodal HDPE, of a polyethylene component (B) being a polyethylene with a density (ASTM D792) in the range of 935 to 965 kg/m$^3$ and an $MFR_2$ (190°C, 2.16 kg, ISO 1133) of 0.0001 to 1.0 g/10 min; and

(II) 51.0 to 99.0 wt% based on the total composition, of a mixed-plastic-polyethylene recycling blend (PERB) having

- a $MFR_2$ (ISO 1133, 2.16 kg, 190°C) of from 0.1 to 1.2 g/10 min,
- a density (ASTM D792) of from 910 to 945 kg/$m^3$; and
- a total amount of ethylene units (C2 units) of from 80.0 to 96.0 wt%, as measured by NMR of the d2-tetrachloroethylene soluble fraction,
  with the total amount of C2 units being based on the total weight amount of monomer units in the mixed-plastic-polyethylene blend (B) and measured according to quantitative $^{13}C\{1H\}$ NMR measurement.

Unexpectedly such a composition provides films with an improved balance between stiffness, impact and optics, i.e. haze.

The invention is therefore further directed to a film comprising at least one layer comprising the above described composition.

The specific design of the multimodal high density polyethylene (HDPE) thereby allows the addition of more recyclate, i.e. of more than 50 wt% of the composition, and still provides films with good impact/stiffness/optics balance.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed high density polyethylene (mHDPE) is defined in this invention as high density polyethylene, which has been produced in the presence of a metallocene catalyst. Ziegler-Natta catalysed high density polyethylene (mHDPE) is defined in this invention as high density polyethylene, which has been produced in the presence of a Ziegler-Natta catalyst.

For the purpose of the present invention "high density polyethylene (HDPE) which comprises polyethylene component (A) and polyethylene component (B)" means that the HDPE is produced in an at least 2-stage sequential polymerization process, wherein first component (A) is produced and component (B) is then produced in the presence of component (A) in a subsequent polymerization step, yielding the HDPE or vice versa, i.e. first component (B) is produced and component (A) is then produced in the presence of component (B) in a subsequent polymerization step, yielding the HDPE.

HDPEs produced in a multistage process are also designated as "in-situ" or "reactor" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

Term "multimodal" in context of high density polyethylene (HDPE) means herein multimodality with respect to melt flow rate (MFR) of at least the ethylene polymer components (A) and (B), i.e. the ethylene polymer components (A) and (B), have different MFR values. The multimodal high density polyethylene can have further multimodality between the polyethylene components (A) and (B) with respect to one or more further properties, like density, comonomer type and/or comonomer content, as will be described later below.

For the purposes of the present description and of the subsequent claims, the term "mixed-plastic-polyethylene recycling blend" indicates a polymer material including predominantly units derived from ethylene apart from other polymeric ingredients of arbitrary nature. Such polymeric ingredients may for example originate from monomer units derived from alpha olefins such as propylene, butylene, hexene, octene, and the like, styrene derivatives such as vinylstyrene, substituted and unsubstituted acrylates, substituted and unsubstituted methacrylates.

Said polymeric materials can be identified in the mixed-plastic polyethylene composition by means of quantitative $^{13}C\{1H\}$ NMR measurements as described herein. In the quantitative $^{13}C\{1H\}$ NMR measurement used herein and described below in the measurement methods different units in the polymeric chain can be distinguished and quantified. These units are ethylene units (C2 units), units having 3, 4 and 6 carbons and units having 7 carbon atoms. Thereby, the units having 3 carbon atoms (C3 units) can be distinguished in the NMR spectrum as isolated C3 units (isolated C3 units) and as continuous C3 units (continuous C3 units) which indicate that the polymeric material contains a propylene based polymer. These continuous C3 units can also be identified as iPP units.

The units having 3, 4, 6 and 7 carbon atoms describe units in the NMR spectrum which are derived from two carbon atoms in the main chain of the polymer and a short side chain or branch of 1 carbon atom (isolated C3 unit), 2 carbon atoms (C4 units), 4 carbon atoms (C6 units) or 5 carbon atoms (C7 units).

The units having 3, 4 and 6 carbon atoms (isolated C3, C4 and C6 units) can derive either from incorporated comonomers (propylene, 1-butene and 1-hexene comonomers) or from short chain branches formed by radical polymerization.

The units having 7 carbon atoms (C7 units) can be distinctively attributed to the mixed-plastic-polyethylene primary recycling blend (A) as they cannot derive from any comonomers. 1-heptene monomers are not used in copolymerization. Instead, the C7 units represent presence of LDPE distinct for the recyclate. It has been found that in LDPE resins the amount of C7 units is always in a distinct range. Thus, the amount of C7 units measured by quantitative $^{13}C\{1H\}$ NMR measurements can be used to calculate the amount of LDPE in a polyethylene composition.

Thus, the amounts of continuous C3 units, isolated C3 units, C4 units, C6 units and C7 units are measured by quantitative $^{13}C\{1H\}$ NMR measurements as described below, whereas the LDPE content is calculated from the amount of C7 units as described below.

The total amount of ethylene units (C2 units) is attributed to units in the polymer chain, which do not have short side chains of 1-5 carbon atoms, in addition to the units attributed to the LDPE (i.e. units which have longer side chains branches of 6 or more carbon atoms).

Conventionally further components such as fillers, including organic and inorganic fillers for example talc, chalk, carbon black, and further pigments such as $TiO_2$ as well as paper and cellulose may be present. In a specific and preferred embodiment the waste stream is a consumer waste stream, such a waste stream may originate from conventional collecting systems such as those implemented in the European Union. Post-consumer waste material is characterized by a limonene content of from 0.1 to 500 mg/kg (as determined using solid phase microextraction (HS-SPME-GC-MS) by standard addition).

The term "natural" in the context of the present invention means that the components are of natural colour. This means that no pigments (including carbon black) are included in the components of the mixed-plastic-polyethylene recycling blend of the present invention.

**Detailed Description of Invention**

The composition of the present invention comprises

(I) 1.0 to 49.0 wt%, preferably 10.0 to 45.0 wt% and more preferably 20.0 to 40.0 wt% based on the total composition, of a multimodal high density polyethylene (HDPE) and
(II) 51.0 to 99.0 wt%, preferably 55.0 to 90.0 wt% and more preferably 60.0 to 80.0 wt% based on the total composition, of a mixed-plastic-polyethylene recycling blend (PERB). The amount of (I) and (II) add up to 100.0 wt%.

*(I) Ad multimodal high density polyethylene (HDPE)*

It has been found that the multimodal high density polyethylene according to the invention provides an improved material for film applications, which combines very good mechanical properties e.g. in terms of tensile modulus, good toughness e.g. in terms of dart drop impact with excellent optical properties e.g. in terms of haze, when added to a mixed-plastic-polyethylene recycling blend (PERB).

The multimodal HDPE used according to the present invention has a density in the range of 948 to 970 kg/$m^3$ and a $MFR_2$ (190°C, 2.16 kg, ISO 1133) of 0.1 to 3.0 g/10 min and wherein the multimodal HDPE comprises at least

(i) 30 to 70 wt%, relative to the total weight of the multimodal HDPE, of a polyethylene component (A) with a density in the range of 955 to 980 kg/$m^3$ and an $MFR_2$ (190°C, 2.16 kg, ISO 1133) of 10 to 1000 g/10 min; and
(ii) 30 to 70 wt%, relative to the total weight of the multimodal HDPE, of a polyethylene component (B) being a polyethylene with a density in the range of 935 to 965 kg/$m^3$ and an $MFR_2$ (190°C, 2.16 kg, ISO 1133) of 0.0001 to 1.0 g/10 min.

The multimodal high density ethylene polymer (HDPE) may be a homopolymer or a copolymer, but is preferably an ethylene copolymer. By ethylene homopolymer is meant a polymer comprising at least 98.0 wt% (such as at least 99.0 wt%, especially at least 99.5 wt%) ethylene monomer units. Thus, the ethylene homopolmer may comprise up to 2.0 wt% comonomer units, but preferably comprises only up to 1.0 wt%, more preferably only up to 0.5 wt%, like up to 0.2 wt% or even up to 0.1 wt% only. By ethylene copolymer is meant a polymer the majority by weight of which derives from ethylene monomer units (i.e. at least 50.0 wt% ethylene relative to the total weight of the copolymer). The comonomer contribution preferably is up to 10 % by mol, more preferably up to 5 % by mol.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene and 4-methyl-pent-1-ene. The use of 1-hexene, 1-octene and 1-butene, or mixtures thereof, is particularly preferred, especially 1-hexene and/or 1-butene.

The polymer of the invention is multimodal and therefore comprises at least two components.

The polymer is preferably bimodal. The polymer of the invention most preferably comprises

(i) a polyethylene component (A) being a lower molecular weight ethylene homo- or copolymer component, and
(ii) a polyethylene component (B) being a higher molecular weight ethylene copolymer component.

Higher molecular weight hereby means that component (B) has a higher molecular weight and thus lower $MFR_2$ than component (A).

Lower molecular weight hereby means that component (A) has a lower molecular weight and thus higher $MFR_2$ than component (B).

The HDPE of the invention is multimodal. Usually, a polyethylene composition comprising at least two polyethylene fractions (e.g. component (A) and component (B)), which have been produced under different polymerization conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal HDPE used according to the present invention has a $MFR_2$ (190°C, 2.16 kg, ISO 1133) of 0.1 to 3.0 g/10 min.

Preferably, the HDPE has an $MFR_2$ of 2.5 g/10 min or less, more preferably 2.0 g/10 min or less and even more preferably 1.5 g/10 min or less. The polymer preferably has a minimum $MFR_2$ of 0.3 g/10min, such as at least 0.5 g/10 min, more preferably at least 0.6 g/10 min. Thus, particularly suitable values of $MFR_2$ are from 0.3 to 2.5 g/10 min, such as 0.5 to 2.0 g/10 min or 0.6 to 1.5 g/10 min.

The $MFR_{21}$ (190°C, 21.6 kg, ISO 1133) of the multimodal HDPE is preferably in a range of 15 to 80 g/10min, more preferably in the range of 20 to 75 g/10 min and most preferably 25 to 65 g/10 min.

The multimodal HDPE used according to the present invention furthermore preferably has a Flow Rate Ratio (FRR) of the $MFR_{21}/MFR_2$ of at least 26.0, more preferably of at least 28.0 and even more preferably of at least 30.0.

Preferably, the Flow Rate Ratio (FRR) of the $MFR_{21}/MFR_2$ is up to 80.0, more preferably up to 75.0 and even more preferably up to 70.0.

Thus, suitable ranges for th FRR are atleast 26.0 to 80.0, preferably at least 28.0 to 75.0 and more preferably at least 30.0 to 70.0.

Additionally, the multimodal HDPE used according to the present invention has a density in the range of 948 to 970 $kg/m^3$, preferably of 950 to 965 $kg/m^3$ and more preferably of 952 to 960 $kg/m^3$.

The multimodal HDPE used according to the present invention comprises at least a lower molecular weight component (A) and a higher molecular weight component (B).

In one particularly preferable embodiment, the HDPE consists of components (A) and (B).

The weight ratio of component (A) to component (B) in the multimodal HDPE is in the range 30:70 to 70:30, preferably 35:65 to 65:35, more preferably 40:60 to 60:40. In some embodiments the ratio may be 35 to 50 wt% of component (A) and 50 to 65 wt% of component (B), such as 40 to 50 wt% of component (A) and 50 to 60 wt% of component (B), wherein the wt% values are relative to the total weight of the multimodal HDPE.

In a particularly preferred embodiment, the wt% values for components (A) and (B) add up to 100 %.

Each of Fraction (A) and Fraction (B) may be an ethylene homopolymer or an ethylene copolymer. The terms "ethylene homopolymer" and "ethylene copolymer" are as defined above, thus the "ethylene homopolymer" as component (A) or (B) may comprise up to 3 wt% comonomer units.

The multimodal HDPE may contain additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

*Embodiment (I)*

In one preferred embodiment, i.e. embodiment (I), the polyethylene component (A) is an ethylene homopolymer and component (B) is an ethylene copolymer.

In this embodiment of the present invention, the polyethylene component (A) preferably has a $MFR_2$ of 100 to 1000 g/10min, more preferably of 150 to 800 g/10min, even more preferably of 200 to 600 g/10min and still more preferably of 250 to 500 g/10 min.

The density of the polyethylene component (A) of this embodiment is preferably in the range of 960 to 980 kg/m$^3$, more preferably of 965 to 978 kg/m$^3$ and even more preferably of 968 to 975 kg/m$^3$.

The polyethylene component (B) of this embodiment preferably has a $MFR_2$ of 0.0005 to 0.5 g/10min, more preferably of 0.0008 to 0.1 g/10min and even more preferably of 0.001 to 0.05 g/10 min and preferably a density in the range of 938 to 955 kg/m$^3$ and more preferably of 940 to 950 kg/m$^3$.

Preferred comonomers for polyethylene component (B) are in this embodiment 1-butene, 1-hexene and 1-octene, more preferably 1-butene is used as comonomer for polyethylene component (B) of this embodiment.

The multimodal HDPE of embodiment (I) may be produced by polymerization using conditions which create a multimodal (e.g. bimodal) polymer product ideally using a Ziegler Natta catalyst system.

Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) HDPE is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions (e.g. at least components (A) and (B)) is produced by producing the at least two polymer components in separate reaction stages, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc..

Preferably, the multimodal HDPE of embodiment (I) is a bimodal HDPE prepared in a two-stage polymerization process.

The first polymerization stage produces the ethylene homopolymer, which is subsequently fed to the second polymerization stage. The second polymerization stage then produces an ethylene copolymer in the presence of the ethylene homopolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amounts of methane, ethane and/or butane.

The temperature in the first polymerization stage is preferably from 60 to 100°C, preferably from 80 to 100°C. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions.

In the second polymerization stage, ethylene is polymerized together with at least one alpha-olefin comonomer, in the presence of the catalyst and the ethylene polymer produced in the first polymerization stage. It will thus be appreciated that the second polymerization stage generates an ethylene polymer, which combines with the ethylene polymer from the first polymerization stage, to form the multimodal HDPE of embodiment (I) of the present invention.

Preferable comonomers are discussed hereinbefore, however it is noted that it is particularly preferable if the at least one alpha-olefin is 1-butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

The split between the first polymerization stage and the second polymerization stage (i.e. between the slurry polymerization and the gas phase polymerization) is typically 30:70 to 70:30, more preferably 35:65 to 65:35, most preferably 40:60 to 60:40.

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 45 to 75°C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount, which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases, it is necessary to introduce so much cocatalyst into the prepolymerization stage that a sufficient polymerization reaction is obtained therein.

It is understood within the scope of the invention, that the amount of polymer produced in the prepolymerization typically lies within 1 - 5 wt% in respect to the final multimodal HDPE.

As stated above, the polymerization for embodiment (I) is conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a MgCl2 based support. Preferably, the support is silica or a MgCl2 based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors. In the production of the multimodal HDPE of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

*Embodiment (II)*

In another preferred embodiment, i.e. embodiment (II), the polyethylene component (A) is an ethylene copolymer and component (B) is an ethylene homopolymer.

Preferably, component (B) consists of a single ethylene homopolymer. Component (A) may consist of a single ethylene copolymer. Alternatively, Component (A) may be an ethylene copolymer mixture comprising (e.g. consisting of) a first ethylene copolymer fraction (A-1) and a second ethylene copolymer fraction (A-2). Component (A) may be unimodal or multimodal. In case component (A) is an ethylene copolymer mixture, it is preferable if the comonomer(s) in the first and second ethylene copolymer fractions are the same.

In this embodiment (II) of the present invention, the polyethylene component (A) preferably has a $MFR_2$ in the range of 10 to 400 g/10min, more preferably 12 to 200 g/10min, even more preferably 15 to 100 g/10min and most preferably 20 to 50 g/10 min.

The density of the polyethylene component (A) preferably is in the range of 955 to 970 $kg/m^3$, more preferably 958 to 968 $kg/m^3$ and even more preferably 960 to 965 $kg/m^3$.

As stated above, in embodiment (II) the polyethylene component (A) is an ethylene copolymer. Preferred ethylene copolymers employ alpha-olefins (e.g. C3-12 alpha-olefins) as comonomers. Examples of suitable alpha-olefins include 1-butene, 1-hexene and 1-octene. 1-butene is an especially preferred comonomer.

It is further preferred that polyethylene component (A) consists of two fractions, i.e. a first ethylene copolymer fraction (A-1) and a second ethylene copolymer fraction (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The $MFR_2$ and/or the density of fractions (A-1) and (A-2) may be the same or may be different from each other.

Thus, the ethylene polymer fraction (A-1) preferably has a $MFR_2$ (190°C, 2.16 kg, ISO 1133) in the range of 1.0 to 80.0 g/10 min, preferably of 5.0 to 40.0 g/10 min, more preferably of 8.0 to 30.0 g/10 min and even more preferably of 10.0 to 25.0 g/10 min.

The ethylene polymer fraction (A-2) preferably has a $MFR_2$ (190°C, 2.16 kg, ISO 1133) in the range of 10.0 to 200.0 g/10 min, preferably of 15.0 to 150.0 g/10 min, more preferably of 20.0 to 100.0 g/10 min and most preferably of

25.0 to 60.0 g/10 min.

Preferably, the $MFR_2$ of fraction (A-2) is higher than the $MFR_2$ of fraction (A-1).

The density of the ethylene polymer fraction (A-1) preferably is in the range of 945 to 970 kg/$m^3$, more preferably 950 to 965 kg/$m^3$ and even more preferably 952 to 962 kg/$m^3$.

The ethylene polymer fraction (A-2) preferably has a density in the range of 950 to 980 kg/$m^3$, more preferably 955 to 975 kg/$m^3$ and even more preferably 960 to 970 kg/$m^3$

Preferably, the density of fraction (A-2) is higher than the density of fraction (A-1).

The polyethylene component (B) preferably has a $MFR_2$ in the range of 0.01 to 1.0 g/10min, more preferably 0.02 to 0.8 g/10min, and even more preferably 0.05 to 0.5 g/10min.

The density of the polyethylene component (B) preferably is in the range of 945 to 965 kg/$m^3$, more preferably 948 to 962 kg/$m^3$ and even more preferably 950 to 960 kg/$m^3$.

As stated above polyethylene component (B) preferably is an ethylene homopolymer.

The multimodal HDPE of embodiment (II) may be produced by polymerization using conditions which create a multimodal (e.g. bimodal) polymer product using a metallocene catalyst system.

Thus, the multimodal HDPE of embodiment (II) can be produced in a 2-stage process, preferably comprising a slurry reactor (loop reactor), whereby the slurry (loop) reactor is connected in series to a gas phase reactor (GPR), whereby either polyethylene component (A) or polyethylene component (B) is produced in the loop reactor and the other ethylene polymer component is then produced in GPR in the presence of the first produced ethylene polymer component to produce the multimodal HDPE, preferably the polyethylene component (A) is produced in the loop reactor and the polyethylen component (B) is produced in GPR in the presence of the polyethylene component (A) to produce the multimodal HDPE.

Process parameters, like temperature, etc. of the 2-stage process are the same as described above for embodiment (I).

In case that the polyethylene component (A) of the multimodal HDPE consists of ethylene polymer fractions (A-1) and (A-2), the multimodal HDPE can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable multimodal polymers can be found in these references.

A suitable process is the Borstar PE process or the Borstar PE 3G process.

The multimodal HDPE according to embodiment (II) of the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of polyethylene component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed multimodal HDPE. This can counted as part of the first polyethylene component (A).

*<u>Catalyst</u>*

The multimodal HDPE of embodiment (II) of the invention is one made using a metallocene catalyst. A metallocene catalyst comprises a metallocene complex and a cocatalyst. The metallocene compound or complex is referred herein also as organometallic compound (C). The organometallic compound (C) comprises a transition metal (M) of

Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

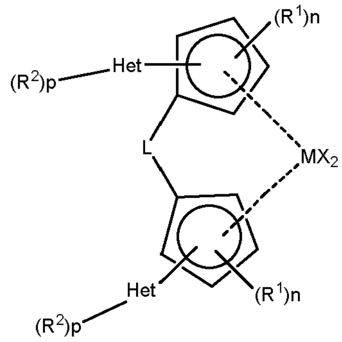

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

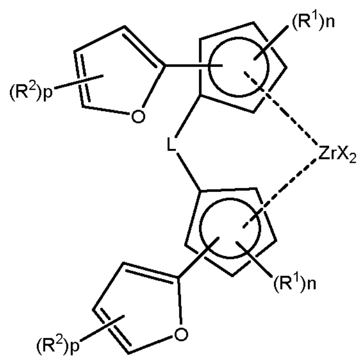

(I′)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

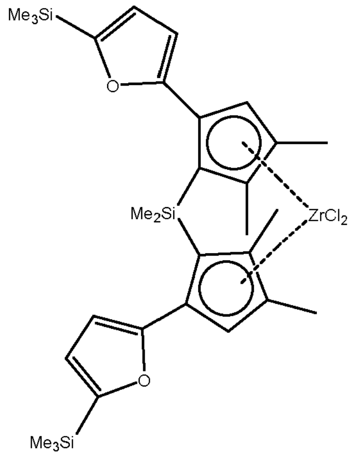
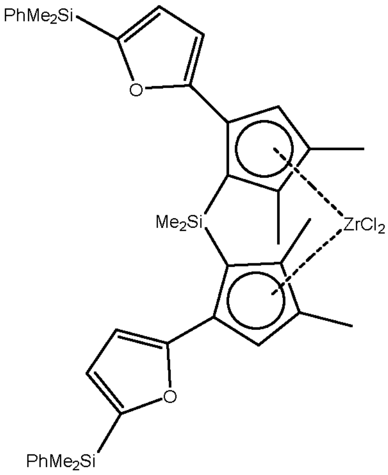
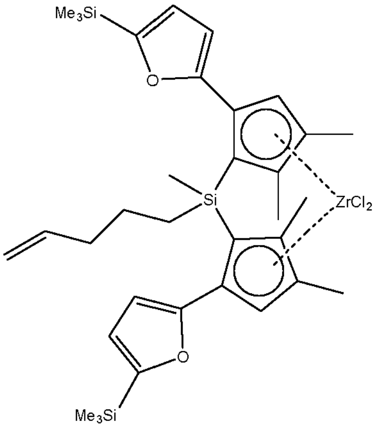
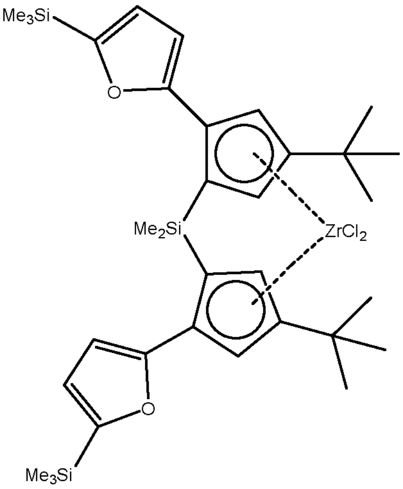

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

*(II) mixed-plastic-polyethylene recycling blend (PERB)*

In addition to the the multimodal HDPE, the composition of the present invention comprises a mixed-plastic-polyethylene recycling blend (PERB).

It is the essence of the present invention that this recycling blend is obtained from a post-consumer waste stream and/or a post-industrial waste stream, preferably from a post-consumer waste stream.

According to the present invention the mixed-plastic-polyethylene recycling blend (PERB) is generally a blend, wherein at least 90 wt%, preferably at least 95 wt%, more preferably 100 wt% of the mixed-plastic-polyethylene recycling blend (B) originates from post-consumer waste, such as from conventional collecting systems (curb-side collection), such as those implemented in the European Union, and/or post-industrial waste, preferably from post-consumer waste.

Said post-consumer waste may be identified by its limonene content. It is preferred that the post-consumer waste has a limonene content of from 0.1 to 500 mg/kg.

The mixed-plastic-polyethylene recycling blend (PERB) preferably comprises

a total amount of ethylene units (C2 units) of from 80.0 wt% to 96.0 wt%, more preferably of from 82.5 wt% to 95.5 wt%, still more preferably of from 85.0 wt% to 95.5 wt% and most preferably of from 87.5 wt% to 95.0 wt%;
a total amount of continuous units having 3 carbon atoms corresponding to polypropylene (continuous C3 units) of from 0.2 to 6.5 wt%, more preferably from 0.4 wt% to 6.0 wt%, still more preferably from 0.6 wt% to 5.5 wt% and most preferably from 0.75 wt% to 5.0 wt%.

The total amounts of C2 units and continuous C3 units thereby are based on the total weight amount of monomer units in the mixed-plastic-polyethylene recycling blend (B) and are measured according to quantitative $^{13}C\{1H\}$ NMR measurement.

In addition to C2 units and continuous C3 units the mixed-plastic-polyethylene recycling blend (B) can further comprise units having 3, 4, 6 or 7 or more carbon atoms so that the mixed-plastic-polyethylene recycling blend (B) overall can comprise ethylene units and a mix of units having 3, 4, 6 and 7 or more carbon atoms.

The mixed-plastic-polyethylene recycling blend (PERB) preferably comprises one or more in any combination, preferably all of:

a total amount of units having 3 carbon atoms as isolated C3 units (isolated C3 units) of from 0.00 wt% to 0.50 wt%, more preferably from 0.00 wt% to 0.40 wt%, still more preferably from 0.00 wt% to 0.30 wt% and most preferably from 0.00 wt% to 0.25 wt%;
a total amount of units having 4 carbon atoms (C4 units) of from 0.50 to 5.00 wt%, more preferably from 0.75 wt% to 4.00 wt%, still more preferably from 1.00 wt% to 3.50 wt% and most preferably from 1.25 wt% to 3.00 wt%;
a total amount of units having 6 carbon atoms (C6 units) of from 0.50 to 7.50 wt%, more preferably from 0.75 wt% to 6.50 wt%, still more preferably from 1.00 wt% to 5.50 wt% and most preferably from 1.25 wt% to 5.00 wt%;
a total amount of units having 7 carbon atoms (C7 units) of from 0.20 wt% to 2.50 wt%, of from 0.30 wt% to 2.00 wt%, still more preferably of from 0.40 to 1.50 wt% and most preferably of from 0.45 wt% to 1.25 wt%, and
a LDPE content of from 20.0 to 65.0 wt%, more preferably from 25.0 wt% to 62.5 wt%, still more preferably from 30.0 wt% to 60.0 wt% and most preferably from 32.0 wt% to 55.0 wt%. The total amounts of C2 units, continuous C3 units, isolated C3 units, C4 units, C6 units, C7 units and LDPE content thereby are based on the total weight amount of monomer units in the mixed-plastic-polyethylene recycling blend (B) and are measured or calculated according to quantitative $^{13}C\{1H\}$ NMR measurement.

Preferably, the total amount of units, which can be attributed to comonomers (i.e. isolated C3 units, C4 units and C6 units), in the mixed-plastic-polyethylene recycling blend (PERB) is from 4.00 wt% to 20.00 wt%, more preferably from 4.50 wt% to 17.50 wt%, still more preferably from 4.75 wt% to 15.00 wt% and most preferably from 5.00 wt% to 12.50 wt%, and is measured according to quantitative $^{13}C\{1H\}$ NMR measurement.

It is preferred that the mixed-plastic-polyethylene recycling blend (PERB) has

a $MFR_2$ (ISO 1133, 2.16 kg, 190 °C) of from 0.1 to 1.2 g/10 min, more preferably from 0.2 to 1.1 g/10 min; and/or
a density of from 910 to 945 kg/m$^3$, more preferably from 915 to 942 kg/m$^3$, most preferably from 918 to 940 kg/m$^3$.

The mixed-plastic-polyethylene recycling blend (PERB) preferably does not comprise carbon black. It is further preferred that the mixed-plastic-polyethylene recycling blend (PERB) does not comprise any pigments other than carbon black.

The mixed-plastic-polyethylene recycling blend (PERB) preferably is a natural mixed-plastic-polyethylene recycling blend (PERB).

The mixed-plastic-polyethylene recycling blend (PERB) may also include:

0 to 10 wt% units derived from alpha olefin(s),
0 to 3.0 wt% stabilizers,
0 to 3.0 wt% talc,
0 to 3.0 wt% chalk,
0 to 6.0 wt% further components
all percentages with respect to the mixed-plastic-polyethylene recycling blend (PERB).

The mixed-plastic-polyethylene recycling blend (PERB) preferably has one or more, more preferably all, of the following properties in any combination:

a $MFR_5$ (ISO 1133, 5.0 kg, 190°C) of from 1.5 to 5.0 g/10 min, more preferably from 2.0 to 4.0 g/10 min;
a $MFR_{21}$ (ISO 1133, 21.6 kg, 190°C) of from 20.0 to 50.0 g/10 min, more preferably from 25.0 to 45.0 g/10 min;
a polydispersity index PI of from 1.0 to 3.5 $s^{-1}$, more preferably from 1.3 to 3.0 $s^{-1}$;
a shear thinning index $SHI_{2.7/210}$ of from 15 to 40, more preferably from 20 to 35;
a complex viscosity at the frequency of 300 rad/s, eta300, of from 500 to 750 Pa·s, more preferably from 550 to 700 Pa·s;
a complex viscosity at the frequency of 0.05 rad/s, eta0.05, of from 15000 to 30000 Pa·s, more preferably from 15500 to 27500 Pa·s;
a strain hardening modulus, SH modulus, of from 12.5 to 20.0 MPa, more preferably from 13.0 to 17.5 MPa.

It is preferred that the mixed-plastic-polyethylene recycling blend (PERB) has a comparatively low gel content, especially in comparison to other mixed-plastic-polyethylene recycling blends. The mixed-plastic-polyethylene recycling blend (PERB) preferably has a gel content for gels with a size of from above 600 μm to 1000 μm of not more than 1000 gels/$m^2$, more preferably not more than 850 gels/$m^2$. The lower limit of the gel content for gels with a size of from above 600 μm to 1000 μm is usually 100 gels/$m^2$, preferably 150 gels/$m^2$.

Still further, the mixed-plastic-polyethylene recycling blend (PERB) preferably has a gel content for gels with a size of from above 1000 μm of not more than 200 gels/$m^2$, more preferably not more than 150 gels/$m^2$. The lower limit of the gel content for gels with a size of from above 1000 μm is usually 10 gels/$m^2$, preferably 14 gels/$m^2$. Mixed-plastic-polyethylene blend(s) (PERB) as used herein are commercially available. One suitable recyclate is e.g. available from Ecoplast Kunststoffrecycling GmbH under the brand names NAV 101 and NAV 102.

As mentioned above, the polyethylene composition according to the present invention provides an improved balance between stiffness, impact and optics, i.e. haze, to films comprising the blend.

The specific design of the multimodal high density polyethylene (HDPE) thereby allows the addition of more recyclate, i.e. of more than 50 wt% of the composition, and still provides films with good impact/stiffness/optics balance.

The invention is therefore further directed to a film comprising at least one layer comprising the above described composition.

**Film**

The film of the invention comprises at least one layer comprising the above defined polyethylene composition. The film can be a monolayer film comprising the above defined polyethylene composition or a multilayer film, wherein at least one layer comprises the above defined polyethylene composition. The terms "monolayer film" and multilayer film" have well known meanings in the art.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm. Films of the invention are preferably not stretched in the machine or transverse or biaxial direction.

Films according to the present invention may have a haze measured according to ASTM D1003 on a 40 μm test blown film of below 25%, preferably in the range of 5 to 24%, more preferably 10 to 22% and even more preferably 12 to 20%.

Films according to the present invention have good stiffness (tensile modulus measured on a 40 μm monolayer test blown film according to ISO 527-3), i.e. >250 MPa (in both directions). Thus, the films comprising the polyethylene composition have a tensile modulus (measured on a 40 μm monolayer test blown film according to ISO 527-3) in machine (MD) as well as in transverse (TD) direction in the range of from >250 MPa to 600 MPa, preferably of from 300 MPa to 500 MPa.

The films of the invention are furthermore characterized by a dart-drop impact strength (DDI) determined according to ISO 7765-1:1988 on a 40 μm monolayer test blown film of at least 40 g up to 150 g , preferably 45 g up to 100 g and more preferably 50 g up to 80 g.

In one embodiment of the present invention, the optomechanical ability (OMA) according to formula (II):

$$OMA = \frac{Tensile\ Modulus\ (MD)[MPa] * DDI(g)}{Haze\ (40\ \mu m)[\%]}$$

determined on 40 µm test blown film is at least 1000 [MPa*g/%] up to 3000 [MPa*g/%], preferably in the range of from 1100 [MPa*g/%] up to 2500 [MPa*g/%], more preferably in the range of from 1300 [MPa*g/%] up to 2000 [MPa*g/%], wherein the Tensile Modulus in machine direction is measured according to ISO 527-3 at 23°C on 40 µm test blown films , DDI is the dart-drop impact strength determined according to ISO 7765-1:1988 on a 40 µm test blown film and haze is measured according to ASTM D1003 on a 40 µm test blown film.

The films according to the present invention are highly useful for being used in various packaging applications, in particular for secondary packaging, which do not require a food approval or even for primary packaging for non-food products.

Furthermore the films according to the present invention may be used as a layer in multilayer polyethylene based blown films, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1 - x) \cdot logC$$

$$C = 10^{\wedge}\frac{(logA - x.logB)}{(1-x)}$$

*For Component B:*

B = $MFR_2$ of Component (A)
C = $MFR_2$ of Component (B)
A = final $MFR_2$ (mixture) of multimodal polyethylene copolymer (P)
X = weight fraction of Component (A).

*For Fraction (A-2):*

B = $MFR_2$ of 1$^{st}$ fraction (A-1)
C = $MFR_2$ of 2$^{nd}$ fraction (A-2)
A = final $MFR_2$ (mixture) of loop polymer (= Component (A))
X = weight fraction of the 1$^{st}$ fraction (A-1).

Density

Density of the polymer was measured according to ASTM D792, Method B (density by balance at 23°C) on compression moulded specimen prepared according to EN ISO 1872-2 (February 2007) and is given in kg/m$^3$.

**Comonomer contents in HDPEs:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.
Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

**Dart drop strength (DDI): Impact resistance by free-falling dart method**

The DDI was measured according to ISO 7765-1:1988 / Method A from the films (non-oriented films and laminates) as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

*Standard conditions:*

Conditioning time: > 96 h
Test temperature: 23 °C
Dart head material: phenolic
Dart diameter: 38 mm
Drop height: 660 mm

*Results:*

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

**Haze**

Haze was determined according to ASTM D 1003-00 on films as produced indicated below.
**Optomechanical ability (OMA)** was determined on 40 μm test blown film and was calculated according to formula (II):

$$OMA = \frac{Tensile\ Modulus\ (MD)[MPa] * DDI(g)}{Haze\ (40\ \mu m)[\%]}$$

wherein the Tensile Modulus in machine direction was measured according to ISO 527-3 at 23°C, DDI is the dart-drop

impact strength determined according to ISO 7765-1:1988 and haze was measured according to ASTM D1003.

**Quantification of C2, iPP (continuous C3), LDPE and polyethylene short chain branches in polyethylene based recyclates**

Quantitative $^{13}C\{1H\}$ NMR spectra were recorded in the solution-state using a Bruker AvanceIII 400MHz NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}C\{1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), γ-carbons (g 29.6 ppm) the 4s and the threeB4 carbon (to be compensated for later on) is taken between 30.9 ppm and 29.3 ppm excluding the Tββ from polypropylene. The amount of C2 related carbons was quantified using all mentioned signals according to the following equation:

$$fC_{C2total} = (Iddg-ItwoB4) + (IstarB1*6) + (IstarB2*7) + (ItwoB4*9) + I(threeB5*10) + ((IstarB4plus-ItwoB4-IthreeB5)*7 + (I3s*3)$$

Characteristic signals corresponding to the presence of polypropylene (iPP, continuous C3)) were observed at 46.7 ppm, 29.0 ppm and 22.0 ppm. The amount of PP related carbons was quantified using the integral of Sαα at 46.6 ppm:

$$fC_{PP} = Is\alpha\alpha * 3$$

The weight percent of the C2 fraction and the polypropylene can be quantified according following equations:

$$wt_{C2fraction} = fC_{C2total} * 100 / (fC_{C2total} + fC_{PP})$$

$$wt_{PP} = fC_{PP} * 100 / (fC_{C2total} + fC_{PP})$$

Characteristic signals corresponding to various short chain branches were observed and their weight percentages quantified as the related branch would be an alpha-olefin, starting by quantifying the weight fraction of each:

$$fwtC2 = fC_{C2total} – ((IstarB1*3) – (IstarB2*4) – (ItwoB4*6) – (IthreeB5*7)$$

$$fwtC3 \text{ (isolated C3)} = IstarB1*3$$

$$fwtC4 = IstarB2*4$$

$$fwtC6 = ItwoB4*6$$

$$fwtC7 = IthreeB5*7$$

Normalisation of all weight fractions leads to the amount of weight percent for all related branches:

$$fsum_{wt\%total} = fwtC2 + fwtC3 + fwtC4 + fwtC6 + fwtC7 + fC_{PP}$$

$$wtC2total = fwtC2 * 100 / fsum_{wt\%total}$$

$$wtC3total = fwtC3 * 100 / fsum_{wt\%total}$$

$$wtC4total = fwtC4 * 100 / fsum_{wt\%total}$$

$$wtC6total = fwtC6 * 100 / fsum_{wt\%total}$$

$$wtC7total = fwtC7 * 100 / fsum_{wt\%total}$$

The content of LDPE can be estimated assuming the B5 branch, which only arises from ethylene being polymerized under high pressure process, being almost constant in LDPE. We found the average amount of B5 if quantified as C7 at 1.46 wt%. With this assumption it is possible to estimate the LDPE content within certain ranges (approximately between 20 wt% and 80 wt%), which are depending on the SNR ratio of the threeB5 signal:

$$wt\%LDPE = wtC7total * 100 / 1.46$$

References:

zhou07 Zhou, Z., Kuemmerle, R., Qiu, X., Redwine, D., Cong, R., Taha, A., Baugh, D. Winniford, B., J. Mag. Reson. 187 (2007) 225.

busico07 Busico, V., Carbonniere, P., Cipullo, R., Pellecchia, R., Severn, J., Talarico, G., Macromol. Rapid Commun. 2007, 28, 1128.

singh09 Singh, G., Kothari, A., Gupta, V., Polymer Testing 28 5 (2009), 475.

randall89 J. Randall, Macromol. Sci., Rev. Macromol. Chem. Phys. 1989, C29, 201.

brandolini00 A. J. Brandolini, D. D. Hills, NMR Spectra of Polymers and Polymer Additives, Marcel Dekker Inc., 2000.


**Rheological measurements**

Dynamic Shear Measurements (frequency sweep measurements)

The characterisation of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the

probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response) t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows:

$$G' = \frac{\sigma_0}{\gamma_0}\cos\delta \text{ [Pa]} \qquad (3)$$

$$G'' = \frac{\sigma_0}{\gamma_0}\sin\delta \text{ [Pa]} \qquad (4)$$

$$G^* = G' + iG'' \text{ [Pa]} \qquad (5)$$

$$\eta^* = \eta' - i\eta'' \text{ [Pa.s]} \qquad (6)$$

$$\eta' = \frac{G''}{\omega} \text{ [Pa.s]} \qquad (7)$$

$$\eta'' = \frac{G'}{\omega} \text{ [Pa.s]} \qquad (8)$$

The determination of so-called Shear Thinning Index, which correlates with MWD and is independent of Mw, is done as described in equation 9.

$$SHI_{(x/y)} = \frac{\text{Eta* for (G* = x kPa)}}{\text{Eta* for (G* = y kPa)}} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity (η*) were obtained as a function of frequency (ω).

Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage

modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *EI(x)* is the value of the storage modulus (G') determined for a value of the loss modulus (G") of x kPa and can be described by equation 10.

$$EI(x) = G' \; for \; (G'' = x \; kPa) \; [\text{Pa}] \qquad (10)$$

For example, the EI(5kPa) is the defined by the value of the storage modulus (G'), determined for a value of G" equal to 5 kPa.

The polydispersity index, *PI*, is defined by equation 11.

$$PI = \frac{10^5}{G'(\omega_{COP})}, \qquad \omega_{COP} = \omega \text{ for } (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

**Strain hardening (SH) modulus**

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, $\lambda$, is between 8 and 12.

The true strain, $\lambda$, is calculated from the length, l (mm), and the gauge length, l0 (mm), as shown by Equation 1.

$$\lambda = \frac{l}{l_0} = 1 + \frac{\Delta l}{l_0} \qquad (1)$$

where $\Delta l$ is the increase in the specimen length between the gauge marks, (mm). The true stress, $\sigma$true (MPa), is calculated according to formula 2, assuming conservation of volume between the gauge marks:

$$\sigma_{true} = \sigma_n \lambda \qquad (2)$$

where $\sigma$n is the engineering stress.

The Neo-Hookean constitutive model (Equation 3) is used to fit the true strain- true stress data from which <Gp> (MPa) for $8 < \lambda < 12$ is calculated.

$$\sigma_{\text{true}} = \frac{<Gp>}{20}\left(\lambda^2 - \frac{1}{\lambda}\right) + C \qquad (3)$$

where C is a mathematical parameter of the constitutive model describing the yield stress extrapolated to $\lambda = 0$.

Initially five specimens are measured. If the variation coefficient of <Gp> is greater than 2.5 %, then two extra specimens are measured. In case straining of the test bar takes place in the clamps the test result is discarded.

The PE granules of materials were compression molded in sheets of 0.30 mm thickness according to the press parameters as provided in ISO 17855-2.

After compression molding of the sheets, the sheets were annealed to remove any orientation or thermal history and maintain isotropic sheets. Annealing of the sheets was performed for 1 h in an oven at a temperature of (120 ± 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table A.

**Table A: Dimensions of Modified ISO 37:1994 Type 3**

| Dimension | | Size (mm) |
|---|---|---|
| L | start length between clamps | 30.0 +/- 0.5 |
| l0 | Gauge length | 12.5+/-0.1 |
| l1 | Prismatic length | 16.0 +/- 1.0 |
| l3 | Total length | 70 |
| R1 | Radius | 10.0 +/- 0.03 |
| R2 | Radius | 8.06 +/- 0.03 |
| b1 | Prismatic width | 4.0 +/- 0.01 |
| b2 | Clamp width | 20.0 +/- 1.0 |
| h | Thickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.

1. The following procedure is performed on a universal tensile testing machine having controlled temperature chamber and non-contact extensometer:
2. Condition the test specimens for at least 30 min in the temperature chamber at a temperature of (80 ± 1) °C prior to starting the test.
3. Clamp the test piece on the upper side.
4. Close the temperature chamber.
5. Close the lower clamp after reaching the temperature of (80 ± 1) °C.
6. Equilibrate the sample for 1 min between the clamps, before the load is applied and measurement starts.
7. Add a pre-load of 0.5 N at a speed of 5 mm/min.
8. Extend the test specimen along its major axis at a constant traverse speed (20 mm/min) until the sample breaks.

During the test, the load sustained by the specimen is measured with a load cell of 200 N. The elongation is measured with a non-contact extensometer.

## Gel content

The gel count was measured with a gel counting apparatus consisting of a measuring extruder, ME 25 / 5200 V1, 25*25D, with five temperature conditioning zones adjusted to a temperature profile of 170/180/190/190/190°C), an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count content measurements the materials were extruded at a screw speed of 30 rounds per minute, a drawing speed of 3-3.5 m/min and a chill roll temperature of 50°C to make thin cast films with a thickness of 70 μm

and a width of approximately 110 mm.

The resolution of the camera is 25 μm × 25 μm on the film. The camera works in transmission mode with a constant grey value (auto.set. margin level = 170). The system is able to decide between 256 grey values from black = 0 to white = 256. For detecting gels, a sensitivity level dark of 25% is used. For each material the average number of gel dots on a film surface area of 10 $m^2$ was inspected by the line camera. The line camera was set to differentiate the gel dot size according to the following:

Gel size (the size of the longest dimension of a gel)
300 μm to 599 μm
600 μm to 999 μm
above 1000 μm

**Film sample preparation**

The test films consisting of the inventive compositions and respective comparative compositions of 40 μm thickness, were prepared using a Collin 30 lab scale mono layer blown film line.The film samples were produced at 194°C, a 1:2.5 blow-up ratio, frostline distance of 120 mm. Blending was done directly on the film extrusion line.

**Examples:**

*Materials used:*

As mixed-plastic-polyethylene recycling blend (PERB) NAV 101 was used.

NAV 101 is a low density polyethylene (LDPE) post-consumer recyclate blend available from Ecoplast Kunststoffrecycling GmbH. The properties of NAV101 are shown in table B.

**Table B: Properties of NAV 101**

| | |
|---|---|
| Ethylene content (wt%) | 90.67 |
| isol. C3 content (wt%) | 0 |
| C4 content (wt%) | 2.23 |
| C6 content (wt%) | 2.73 |
| C7 content (wt%) | 0.48 |
| iPP content (wt%) | 3.89 |
| LDPE content (wt%) | 33.00 |
| Density (kg/$m^3$) | 923.9 |
| $MFR_2$ (g/10min) | 1.02 |
| $MFR_5$ (g/10min) | 3.57 |
| $MFR_{21}$ (g/10min) | 41.56 |
| SHI2.7/210 | 22.16 |
| eta0.05 (Pa·s) | 16187 |
| eta300 (Pa·s) | 618 |
| PI (s-1) | 1.46 |
| SH modulus (MPa) | 14.3 |
| Gel content (>1000 μm) (1/$m^2$) | 16.9 |
| Gel content (600-1000 μm) (1/$m^2$) | 175.1 |
| Gel content (300-599) (μm/1$m^2$) | 885.9 |

Blending partner for Comparative Examples CE1 to CE3:

CE1: Enable 4002MC (4002MC) commercially available from ExxonMobile, $MFR_2$ 0.25 g/10min and density 940 $kg/m^3$.

CE2: ELITE™ 5940ST (5940ST) produced by DOW's INSITE technology and commercially available from DOW, $MFR_2$ 0.8 g/10min and density 941 $kg/m^3$.

CE3: Lumicene Supertough 40ST05 (40ST05), commercially available from Total, a metallocene MDPE with density 940 $kg/m^3$, $MFR_2$ 0.5 g/10min.

**Cat.Example: Catalyst preparation for CAT1 for Inventive Example 1:**

*Loading* of *SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**CAT2 for Inventive Example 2**

For Inventive Example 2 a ZN catalyst as disclosed in EP2994506 has been used.

**Polymerization:**

IE1: Borstar pilot plant with a 3-reactor set-up (loop1 - loop2 - GPR 1) and prepolymerization.

IE2: Borstar pilot plant with a 2-reactor set-up (loop1- GPR 1) and prepolymerization.

Multimodal HDPE-1 and HDPE-2 were produced using the polymerization conditions as given in Table 1.

## Table 1: Polymerization conditions for HDPE-1 and HDPE-2

| | HDPE-1 for IE1 | HDPE-2 for IE2 |
|---|---|---|
| **Catalyst** | CAT1 | CAT2 |
| **Prepoly loop reactor** | | |
| Temp. (°C) | 50 | 70 |
| Press. (kPa) | 5851 | 5700 |
| $H_2$(g/h) | 0.04 | 5.0 |
| Split (wt%) | 3.7 | 1.0 |
| **loop 1 Fraction (A-1) resp. component (A) for IE2** | | |
| Temp. (°C) | 85 | 95 |
| Press. (kPa) | 5445 | 5500 |
| C2 conc. (mol%) | 4.3 | 3.5 |
| H2/C2 ratio (mol/kmol) | 0.59 | 430 |
| C4/C2 ratio (mol/kmol) | 3.8 | - |
| Split (wt%) | 19.9 | 48.0 |
| Density (kg/m3) of loop 1 material (fraction (A-1), respect. Component (A)) | 958.8 | 970.0 |
| MFR2 (g/10 min) of loop 1 material (fraction (A-1), respect. Component (A)) | 14.9 | 350 |
| **loop 2** | | Not in use |
| Temp. (°C) | 85 | |
| Press. (kPa) | 5390 | |
| C2 conc. (mol%) | 4.0 | |
| H2/C2 ratio (mol/kmol) | 0.34 | |
| C4/C2 ratio (mol/kmol) | 1.2 | |
| Split (wt%) | 22.0 | |
| Density (kg/m3) after loop 2 (component (A)) | 963.1 | |
| MFR2 (g/10 min) after loop 2 (component (A)) | 24.0 | |
| MFR2 (g/10 min) of loop 2 material (fraction (A-2)) | 39.4 | |
| Density (kg/m3) of loop 2 material (fraction (A-2)) | 967.6 | |
| **GPR** | | |
| Temp. (°C) | 85 | 85 |
| Press. (kPa) | 2000 | 2000 |
| H2/C2 ratio (mol/kmol) | 0.34 | 110 |
| C4/C2 ratio (mol/kmol) | - | 25 |
| Split (wt%) | 55 | 51 |
| MFR2 (g/10 min) of GPR material (Component (B)) | 0.06 | 0.002 |
| Density (kg/m3) of GPR material (Component (B)) | 953.1 | 941.6 |

The polymers were mixed with 0.05wt% Irganox 1010 (BASF), 0.2 wt% Irgafos 168 (BASF) & 0.05 wt% CEASIT FI (Baerlocher) calcium stearate, where wt% are relative to total weight of composition (the sum of HDPE powder + additive = 100%) compounded and extruded on a ZSK 57 twin screw extruder. The melt temperature was 210°C, production rate was 200kg/h.

**Table 2: Material properties of HDPE-1 and HDPE-2,**

| Material | HDPE-1 | HDPE-2 |
|---|---|---|
| $MFR_2$ (g/10 min) (final) | 0.86 | 0.80 |
| $MFR_{21}$ (g/10 min) | 27.7 | 47.35 |
| $MFR_{21}/MFR_2$ | 32.2 | 59.2 |
| Density ($kg/m^3$) | 957.6 | 955.7 |

**Monolayer blown films**

The above produced HDPEs (respectively the polymers used for the Comparative Examples) were blended with NAV 101 directly on the film extrusion line.

The following films have been produced with the above described method (film sample preparation).

**Table 3: Composition and Properties of blown films**

| | | IE1 | IE2 | CE1 | CE2 | CE3 |
|---|---|---|---|---|---|---|
| NAV 101 | wt% | 70 | 70 | 70 | 70 | 70 |
| HDPE-1 | wt% | 30 | | | | |
| HDPE-2 | wt% | | 30 | | | |
| 4002MC | wt% | | | 30 | | |
| 5940ST | wt% | | | | 30 | |
| 40ST05 | wt% | | | | | 30 |
| TM/MD | MPa | 361 | 347 | 291 | 348 | 282 |
| TM/TD | MPa | 423 | 412 | 411 | 430 | 341 |
| DDI | g | 54 | 69 | 53 | 69 | 68 |
| Haze | % | 17.4 | 16.4 | 26.5 | 27.6 | 23.7 |
| OMA | | 1118 | 1464 | 582 | 870 | 809 |

As can be seen from the above table the compositions using the multimodal HDPEs according to the present invention show equal to improved tensile modulus, but clearly lower haze values. The toughness is furthermore not effected negatively. This leads to a clearly improved overall performance, i.e. improved balance between stiffness, toughness and optics, i.e. haze (improved OMA) of the compositions according to the present invention compared to the Comparative Examples.

**Claims**

**1.** A composition comprising

(I) 1.0 to 49.0 wt% based on the total composition, of a multimodal high density polyethylene (HDPE), wherein the multimodal HDPE has a density (ASTM D792) in the range of 948 to 970 $kg/m^3$ and a $MFR_2$ (190°C, 2.16 kg, ISO 1133) of 0.1 to 3.0 g/10 min and wherein the multimodal HDPE comprises at least

(i) 30 to 70 wt%, relative to the total weight of the multimodal HDPE, of a polyethylene component (A) with a density (ASTM D792) in the range of 955 to 980 $kg/m^3$ and an $MFR_2$ (190°C, 2.16 kg, ISO 1133) of 10 to 1000 g/10 min; and

(ii) 30 to 70 wt%, relative to the total weight of the multimodal HDPE, of a polyethylene component (B) being a polyethylene with a density (ASTM D792) in the range of 935 to 965 $kg/m^3$ and an $MFR_2$ (190°C, 2.16 kg, ISO 1133) of 0.0001 to 1.0 g/10 min; and

(II) 51.0 to 99.0 wt% based on the total composition, of a mixed-plastic-polyethylene recycling blend (PERB) having
a $MFR_2$ (ISO 1133, 2.16 kg, 190°C) of from 0.1 to 1.2 g/10 min,
a density (ASTM D792) of from 910 to 945 $kg/m^3$; and
a total amount of ethylene units (C2 units) of from 80.0 to 96.0 wt%, as measured by NMR of the d2-tetrachloroethylene soluble fraction,
with the total amount of C2 units being based on the total weight amount of monomer units in the mixed-plastic-polyethylene blend (B) and measured according to quantitative $^{13}C\{1H\}$ NMR measurement.

**2.** The composition according to claim 1, wherein the multimodal HDPE has

a $MFR_2$ in the range of 0.3 to 2.5 g/10 min, preferably 0.5 to 2.0 g/10 min and more preferably 0.6 to 1.5 g/10 min and/or
a $MFR_{21}$ (190°C, 21.6 kg, ISO 1133) in the range of 15 to 80 g/10min, preferably in the range of 20 to 75 g/10 min and more preferably 25 to 65 g/10 min and/or
a Flow Rate Ratio (FRR) of the $MFR_{21}/MFR_2$ in the range of at least 26.0 to 80.0, preferably at least 28.0 to 75.0 and more preferably of at least 30.0 to 70.0.

**3.** The composition according to claim 1 or 2, wherein in the multimodal HDPE the polyethylene component (A) is an ethylene homopolymer and polyethylene component (B) is an ethylene copolymer, whereby as comonomer for the polyethylene component (B) 1-butene, 1-hexene or 1-octene, more preferably 1-butene is used.

**4.** The composition according to claim 3, wherein

the polyethylene component (A) has a $MFR_2$ of 100 to 1000 g/10min, preferably of 150 to 800 g/10min, more preferably of 200 to 600 g/10min and still more preferably of 250 to 500 g/10 min and/or
a density (ASTM D792) in the range of 960 to 980 $kg/m^3$, more preferably of 965 to 978 $kg/m^3$ and even more preferably of 968 to 975 $kg/m^3$; and/or
the polyethylene component (B) has a $MFR_2$ of 0.0005 to 0.5 g/10min, preferably of 0.0008 to 0.1 g/10min and more preferably of 0.001 to 0.05 g/10 min and/or
a density (ASTM D792) in the range of 938 to 955 $kg/m^3$ and preferably of 940 to 950 $kg/m^3$.

**5.** The composition according to claim 3 or 4, wherein the multimodal HDPE is produced in a two-stage polymerization process using a Ziegler Natta catalyst system.

**6.** The composition according to claim 1 or 2, wherein in the multimodal HDPE the polyethylene component (A) is an ethylene copolymer whereby as comonomer for the polyethylene component (A) 1-butene, 1-hexene or 1-octene, more preferably 1-butene is used and polyethylene component (B) is an ethylene homopolymer, whereby polyethylene component (A) may consist of a single ethylene copolymer or may be an ethylene copolymer mixture comprising, preferably consisting of a first ethylene copolymer fraction (A-1) and a second ethylene copolymer fraction (A-2).

**7.** The composition according to claim 6, wherein in the multimodal HDPE

the polyethylene component (A) has a $MFR_2$ in the range of 10 to 400 g/10min, preferably 12 to 200 g/10min, more preferably 15 to 100 g/10min and most preferably 20 to 50 g/10 min and a density (ASTM D792) in the range of 955 to 970 $kg/m^3$, preferably 958 to 968 $kg/m^3$ and even more preferably 960 to 965 $kg/m^3$; and
in case that polyethylene component (A) consists of a first ethylene copolymer fraction (A-1) and a second ethylene copolymer fraction (A-2), the $MFR_2$ and/or the density of fractions (A-1) and (A-2) may be the same or may be different from each other, whereby
the ethylene polymer fraction (A-1) has a $MFR_2$ (190°C, 2.16 kg, ISO 1133) in the range of 1.0 to 80.0 g/10 min, preferably of 5.0 to 40.0 g/10 min, more preferably of 8.0 to 30.0 g/10 min and even more preferably of 10.0 to 25.0 g/10 min and
a density (ASTM D792) in the range of 945 to 970 $kg/m^3$, preferably 950 to 965 $kg/m^3$ and eve more preferably 952 to 962 $kg/m^3$; and
the ethylene polymer fraction (A-2) has a $MFR_2$ (190°C, 2.16 kg, ISO 1133) in the range of 10.0 to 200.0 g/10 min, preferably of 15.0 to 150.0 g/10 min, more preferably of 20.0 to 100.0 g/10 min and most preferably of 25.0 to 60.0 g/10 min and

a density (ASTM D792) in the range of 950 to 980 kg/$m^3$, preferably 955 to 975 kg/$m^3$ and more preferably 960 to 970 kg/$m^3$; and/or
the polyethylene component (B) has a $MFR_2$ in the range of 0.01 to 1.0 g/10min, preferably 0.02 to 0.8 g/10min, and more preferably 0.05 to 0.5 g/10min and
a density (ASTM D792) in the range of 945 to 965 kg/$m^3$, preferably 948 to 962 kg/$m^3$ and more preferably 950 to 960 kg/$m^3$.

**8.** The composition according to claim 6 or 7, wherein the multimodal HDPE is prepared in a two-stage or three-stage polymerization process using a metallocene catalyst system.

**9.** The composition according to any of the preceding claims, wherein the mixed-plastic-polyethylene recycling blend (PERB) comprises a total amount of ethylene units (C2 units) of from 80.0 wt% to 96.0 wt%, more preferably of from 82.5 wt% to 95.5 wt%, still more preferably of from 85.0 wt% to 95.5 wt% and most preferably of from 87.5 wt% to 95.0 wt%;
a total amount of continuous units having 3 carbon atoms corresponding to polypropylene (continuous C3 units) of from 0.2 to 6.5 wt%, more preferably from 0.4 wt% to 6.0 wt%, still more preferably from 0.6 wt% to 5.5 wt% and most preferably from 0.75 wt% to 5.0 wt%; the total amounts of C2 units and continuous C3 units thereby are based on the total weight amount of monomer units in the mixed-plastic-polyethylene recycling blend (PERB) and are measured according to quantitative $^{13}C\{1H\}$ NMR measurement.

**10.** The composition according to any of the preceding claims, wherein the mixed-plastic-polyethylene recycling blend (PERB) preferably comprises one or more in any combination, preferably all of:

a total amount of units having 3 carbon atoms as isolated C3 units (isolated C3 units) of from 0.00 wt% to 0.50 wt%, more preferably from 0.00 wt% to 0.40 wt%, still more preferably from 0.00 wt% to 0.30 wt% and most preferably from 0.00 wt% to 0.25 wt%;
a total amount of units having 4 carbon atoms (C4 units) of from 0.50 to 5.00 wt%, more preferably from 0.75 wt% to 4.00 wt%, still more preferably from 1.00 wt% to 3.50 wt% and most preferably from 1.25 wt% to 3.00 wt%;
a total amount of units having 6 carbon atoms (C6 units) of from 0.50 to 7.50 wt%, more preferably from 0.75 wt% to 6.50 wt%, still more preferably from 1.00 wt% to 5.50 wt% and most preferably from 1.25 wt% to 5.00 wt%;
a total amount of units having 7 carbon atoms (C7 units) of from 0.20 wt% to 2.50 wt%, of from 0.30 wt% to 2.00 wt%, still more preferably of from 0.40 to 1.50 wt% and most preferably of from 0.45 wt% to 1.25 wt%, and
a LDPE content of from 20.0 to 65.0 wt%, more preferably from 25.0 wt% to 62.5 wt%, still more preferably from 30.0 wt% to 60.0 wt% and most preferably from 32.0 wt% to 55.0 wt%; the total amounts of C2 units, continuous C3 units, isolated C3 units, C4 units, C6 units, C7 units and LDPE content thereby are based on the total weight amount of monomer units in the mixed-plastic-polyethylene recycling blend (PERB) and are measured or calculated according to quantitative $^{13}C\{1H\}$ NMR measurement.

**11.** The composition according to any of the preceding claims, wherein the mixed-plastic-polyethylene recycling blend (PERB) has

a $MFR_2$ (ISO 1133, 2.16 kg, 190 °C) in the range of 0.2 to 1.1 g/10 min; and/or
a density (ASTM D792) in the range of 915 to 942 kg/$m^3$, preferably 918 to 940 kg/$m^3$.

**12.** The composition according to any of the preceding claims, wherein the composition consists of

(I) 10.0 to 45.0 wt% and preferably 20.0 to 40.0 wt% of the multimodal high density polyethylene (HDPE) and
(II) 55.0 to 90.0 wt% and preferably 60.0 to 80.0 wt% of the mixed-plastic-polyethylene recycling blend (PERB).

**13.** A film comprising a composition according to any of the preceding claims 1 to 12.

**14.** The film according to claim 13, wherein the film is **characterized by** an optomechanical ability (OMA) according to formula (I):

$$OMA = \frac{Tensile\ Modulus\ (MD)[MPa] * DDI(g)}{Haze\ (40\ \mu m)[\%]}$$

determined on 40 μm test blown film is at least 1000 [MPa*g/%] up to 3000 [MPa*g/%], preferably in the range of from 1100 [MPa*g/%] up to 2500 [MPa*g/%], more preferably in the range of from 1300 [MPa*g/%] up to 2000 [MPa*g/%], wherein the Tensile Modulus in machine direction is measured according to ISO 527-3 at 23°C on 40 μm test blown films , DDI is the dart-drop impact strength determined according to ISO 7765-1:1988 on a 40 μm test blown film and haze is measured according to ASTM D1003 on a 40 μm test blown film.

**15.** Use of a film according to any of the preceding claims 13 to 14 as packing material, in particular for secondary packaging, which do not require a food approval or for primary packaging for non-food products.

## Patentansprüche

**1.** Zusammensetzung, die umfasst:

(I) 1,0 bis 49,0 Gew.-%, bezogen auf die Gesamtzusammensetzung, eines multimodalen Polyethylens hoher Dichte (HDPE),
wobei das multimodale HDPE eine Dichte (ASTM D792) im Bereich von 948 bis 970 kg/$m^3$ und einen $MFR_2$ (190°C, 2,16 kg, ISO 1133) von 0,1 bis 3,0 g/10 min aufweist und wobei das multimodale HDPE mindestens umfasst:

(i) 30 bis 70 Gew.-%, bezogen auf das Gesamtgewicht des multimodalen HDPE, einer Polyethylenkomponente (A) mit einer Dichte (ASTM D792) im Bereich von 955 bis 980 kg/$m^3$ und einem $MFR_2$ (190°C, 2,16 kg, ISO 1133) von 10 bis 1000 g/10 min; und
(ii) 30 bis 70 Gew.-%, bezogen auf das Gesamtgewicht des multimodalen HDPE, einer Polyethylenkomponente (B), die ein Polyethylen mit einer Dichte (ASTM D792) im Bereich von 935 bis 965 kg/$m^3$ und einem $MFR_2$ (190°C, 2,16 kg, ISO 1133) von 0,0001 bis 1,0 g/10 min ist; und

(II) 51,0 bis 99,0 Gew.-%, bezogen auf die Gesamtzusammensetzung, einer Mischkunststoff-Polyethylen-Recyclingmischung (PERB), die aufweist:

einen $MFR_2$ (ISO 1133, 2,16 kg, 190°C) von 0,1 bis 1,2 g/10 min,
eine Dichte (ASTM D792) von 910 bis 945 kg/$m^3$; und
eine Gesamtmenge an Ethyleneinheiten (C2-Einheiten) von 80,0 bis 96,0 Gew.-%, gemessen mittels NMR der in d2-Tetrachlorethylen löslichen Fraktion,
wobei die Gesamtmenge an C2-Einheiten auf die Gesamtgewichtsmenge an Monomereinheiten in der Mischkunststoff-Polyethylen-Mischung (B) bezogen ist und durch quantitative $^{13}C\{^1H\}$ NMR-Messung gemessen ist.

**2.** Zusammensetzung nach Anspruch 1, wobei das multimodale HDPE aufweist:

einen $MFR_2$ im Bereich von 0,3 bis 2,5 g/10 min, vorzugsweise 0,5 bis 2,0 g/10 min und stärker bevorzugt 0,6 bis 1,5 g/10 min und/oder
ein $MFR_{21}$ (190°C, 21,6 kg, ISO 1133) im Bereich von 15 bis 80 g/10 min, vorzugsweise im Bereich von 20 bis 75 g/10 min und stärker bevorzugt 25 bis 65 g/10 min und/oder
ein Flussratenverhältnis (FRR) des $MFR_{21}/MFR_2$ im Bereich von mindestens 26,0 bis 80,0, vorzugsweise mindestens 28,0 bis 75,0 und stärker bevorzugt von mindestens 30,0 bis 70,0.

**3.** Zusammensetzung nach Anspruch 1 oder 2, wobei in dem multimodalen HDPE die Polyethylenkomponente (A) ein Ethylenhomopolymer und die Polyethylenkomponente (B) ein Ethylencopolymer ist, wobei als Comonomer für die Polyethylenkomponente (B) 1-Buten, 1-Hexen oder 1-Octen, besonders bevorzugt 1-Buten, verwendet ist.

**4.** Zusammensetzung nach Anspruch 3, wobei

die Polyethylenkomponente (A) einen $MFR_2$ von 100 bis 1000 g/10min, vorzugsweise von 150 bis 800 g/10min, noch bevorzugter von 200 bis 600 g/10min und weiter bevorzugt von 250 bis 500 g/10min aufweist und/oder eine Dichte (ASTM D792) im Bereich von 960 bis 980 kg/$m^3$, bevorzugter von 965 bis 978 kg/$m^3$ und noch bevorzugter von 968 bis 975 kg/$m^3$ aufweist; und/oder
die Polyethylenkomponente (B) einen $MFR_2$ von 0,0005 bis 0,5 g/10 min, vorzugsweise von 0,0008 bis 0,1 g/10

min und noch bevorzugter von 0,001 bis 0,05 g/10 min aufweist und/oder
eine Dichte (ASTM D792) im Bereich von 938 bis 955 kg/$m^3$ und vorzugsweise von 940 bis 950 kg/$m^3$ aufweist.

**5.** Zusammensetzung nach Anspruch 3 oder 4, wobei das multimodale HDPE in einem zweistufigen Polymerisationsverfahren unter Verwendung eines Ziegler-Natta-Katalysatorsystems hergestellt ist.

**6.** Zusammensetzung nach Anspruch 1 oder 2, wobei in dem multimodalen HDPE die Polyethylenkomponente (A) ein Ethylen-Copolymer ist, wobei als Comonomer für die Polyethylenkomponente (A) 1-Buten, 1-Hexen oder 1-Octen, besonders bevorzugt 1-Buten, verwendet ist und die Polyethylenkomponente (B) ein Ethylen-Homopolymer ist, wobei die Polyethylenkomponente (A) aus einem einzelnen Ethylen-Copolymer bestehen kann oder eine Ethylen-Copolymer-Mischung sein kann, die vorzugsweise aus einer ersten Ethylen-Copolymer-Fraktion (A-1) und einer zweiten Ethylen-Copolymer-Fraktion (A-2) besteht.

**7.** Zusammensetzung nach Anspruch 6, wobei in dem multimodalen HDPE

die Polyethylenkomponente (A) einen $MFR_2$ im Bereich von 10 bis 400 g/10min, vorzugsweise 12 bis 200 g/10min, noch bevorzugter 15 bis 100 g/10min und am meisten bevorzugt 20 bis 50 g/10min aufweist und eine Dichte (ASTM D792) im Bereich von 955 bis 970 kg/$m^3$, vorzugsweise 958 bis 968 kg/$m^3$ und noch bevorzugter 960 bis 965 kg/$m^3$ aufweist; und
für den Fall, dass die Polyethylenkomponente (A) aus einer ersten Ethylen-Copolymerfraktion (A-1) und einer zweiten Ethylen-Copolymerfraktion (A-2) besteht, der $MFR_2$ und/oder die Dichte der Fraktionen (A-1) und (A-2) gleich oder voneinander verschieden sein können, wobei
die Ethylenpolymerfraktion (A-1) einen $MFR_2$ (190°C, 2,16 kg, ISO 1133) im Bereich von 1,0 bis 80,0 g/10 min, vorzugsweise von 5,0 bis 40,0 g/10 min, stärker bevorzugt von 8,0 bis 30,0 g/10 min und noch stärker bevorzugt von 10,0 bis 25,0 g/10 min aufweist und
eine Dichte (ASTM D792) im Bereich von 945 bis 970 kg/$m^3$, vorzugsweise 950 bis 965 kg/$m^3$ und noch mehr bevorzugt 952 bis 962 kg/$m^3$; und
die Ethylenpolymerfraktion (A-2) einen $MFR_2$ (190°C, 2,16 kg, ISO 1133) im Bereich von 10,0 bis 200,0 g/10 min, vorzugsweise von 15,0 bis 150,0 g/10 min, noch bevorzugter von 20,0 bis 100,0 g/10 min und am meisten bevorzugt von 25,0 bis 60,0 g/10 min aufweist und
eine Dichte (ASTM D792) im Bereich von 950 bis 980 kg/$m^3$, vorzugsweise 955 bis 975 kg/$m^3$ und stärker bevorzugt 960 bis 970 kg/$m^3$; und/oder
die Polyethylenkomponente (B) einen $MFR_2$ im Bereich von 0,01 bis 1,0 g/10min, vorzugsweise 0,02 bis 0,8 g/10min und stärker bevorzugt 0,05 bis 0,5 g/10min und
eine Dichte (ASTM D792) im Bereich von 945 bis 965 kg/$m^3$, vorzugsweise 948 bis 962 kg/$m^3$ und stärker bevorzugt 950 bis 960 kg/$m^3$.

**8.** Zusammensetzung nach Anspruch 6 oder 7, wobei das multimodale HDPE in einem zweistufigen oder dreistufigen Polymerisationsverfahren unter Verwendung eines Metallocenkatalysatorsystems hergestellt ist.

**9.** Zusammensetzung nach einem der vorhergehenden Ansprüche, wobei die Mischkunststoff-Polyethylen-Recyclingmischung (PERB) eine Gesamtmenge an Ethyleneinheiten (C2-Einheiten) von 80,0 Gew.-% bis 96,0 Gew.-%, bevorzugter von 82,5 Gew.-% bis 95,5 Gew.-%, noch bevorzugter von 85,0 Gew.-% bis 95,5 Gew.-% und am meisten bevorzugt von 87,5 Gew.-% bis 95,0 Gew.-% umfasst;

eine Gesamtmenge an kontinuierlichen Einheiten mit 3 Kohlenstoffatomen, die Polypropylen entsprechen (kontinuierliche C3-Einheiten), von 0,2 bis 6,5 Gew.-%, bevorzugter von 0,4 Gew.-% bis 6,0 Gew.-%, noch bevorzugter von 0,6 Gew.-% bis 5,5 Gew.-% und am meisten bevorzugt von 0,75 Gew.-% bis 5,0 Gew.-% umfasst;
die Gesamtmengen an C2-Einheiten und kontinuierlichen C3-Einheiten beziehen sich dabei auf die Gesamtgewichtsmenge der Monomereinheiten in der Mischkunststoff-Polyethylen-Recyclingmischung (PERB) und sind durch quantitative $^{13}C\{^1H\}$ NMR-Messung gemessen.

**10.** Zusammensetzung nach einem der vorhergehenden Ansprüche, wobei das Mischkunststoff-Polyethylen-Recyclingmischung (PERB) vorzugsweise eines oder mehrere der Folgenden in beliebiger Kombination, vorzugsweise alle davon, umfasst:

eine Gesamtmenge an Einheiten mit 3 Kohlenstoffatomen als isolierte C3-Einheiten (isolierte C3-Einheiten) von 0,00 Gew.-% bis 0,50 Gew.-%, bevorzugter von 0,00 Gew.-% bis 0,40 Gew.-%, noch bevorzugter von 0,00

Gew.-% bis 0,30 Gew.-% und am meisten bevorzugt von 0,00 Gew.-% bis 0,25 Gew.-%;
eine Gesamtmenge an Einheiten mit 4 Kohlenstoffatomen (C4-Einheiten) von 0,50 bis 5,00 Gew.-%, bevorzugter von 0,75 Gew.-% bis 4,00 Gew.-%, noch bevorzugter von 1,00 Gew.-% bis 3,50 Gew.-% und am meisten bevorzugt von 1,25 Gew.-% bis 3,00 Gew.-%;
eine Gesamtmenge an Einheiten mit 6 Kohlenstoffatomen (C6-Einheiten) von 0,50 bis 7,50 Gew.-%, bevorzugter von 0,75 Gew.-% bis 6,50 Gew.-%, noch bevorzugter von 1,00 Gew.-% bis 5,50 Gew.-% und am meisten bevorzugt von 1,25 Gew.-% bis 5,00 Gew.-%;
eine Gesamtmenge an Einheiten mit 7 Kohlenstoffatomen (C7-Einheiten) von 0,20 Gew.-% bis 2,50 Gew.-%, von 0,30 Gew.-% bis 2,00 Gew.-%, noch bevorzugter von 0,40 bis 1,50 Gew.-% und am meisten bevorzugt von 0,45 Gew.-% bis 1,25 Gew.-%, und
einen LDPE-Gehalt von 20,0 bis 65,0 Gew.-%, bevorzugter von 25,0 bis 62,5 Gew.-%, noch bevorzugter von 30,0 bis 60,0 Gew.-% und am meisten bevorzugt von 32,0 bis 55,0 Gew.-%;
die Gesamtmengen an C2-Einheiten, kontinuierlichen C3-Einheiten, isolierten C3-Einheiten, C4-Einheiten, C6-Einheiten, C7-Einheiten und der LDPE-Gehalt beziehen sich dabei auf die Gesamtgewichtsmenge der Monomereinheiten in der Mischkunststoff-Polyethylen-Recyclingmischung (PERB) und sind durch quantitative $^{13}C\{1H\}$ NMR-Messung gemessen.

**11.** Zusammensetzung nach einem der vorhergehenden Ansprüche, wobei die Mischkunststoff-Polyethylen-Recyclingmischung (PERB) aufweist:

einen $MFR_2$ (ISO 1133, 2,16 kg, 190 °C) im Bereich von 0,2 bis 1,1 g/10 min; und/oder
eine Dichte (ASTM D792) im Bereich von 915 bis 942 kg/m$^3$, vorzugsweise 918 bis 940 kg/m$^3$.

**12.** Zusammensetzung nach einem der vorhergehenden Ansprüche, wobei die Zusammensetzung besteht aus

(I) 10,0 bis 45,0 Gew.-% und vorzugsweise 20,0 bis 40,0 Gew.-% des multimodalen Polyethylens hoher Dichte (HDPE) und
(II) 55,0 bis 90,0 Gew.-% und vorzugsweise 60,0 bis 80,0 Gew.-% der Mischkunststoff-Polyethylen-Recyclingmischung (PERB).

**13.** Folie bzw. Lage, die eine Zusammensetzung nach einem der vorhergehenden Ansprüche 1 bis 12 enthält.

**14.** Folie bzw. Lage nach Anspruch 13, wobei die Folie bzw. Lage durch eine optomechanische Fähigkeit (OMA) gemäß Formel (I) gekennzeichnet ist:

$$OMA = \frac{Zugmodul\ (MD)[MPa] * DDI\ (g)}{Trübung\ (40\mu m)[\%]}$$

bestimmt an einer 40 μm Prüfblasfolie, beträgt mindestens 1000 [MPa*g/%] bis 3000 [MPa*g/%], vorzugsweise im Bereich von 1100 [MPa*g/%] bis 2500 [MPa*g/%], stärker bevorzugt im Bereich von 1300 [MPa*g/%] bis 2000 [MPa*g/%], wobei der Zugmodul in Maschinenrichtung nach ISO 527-3 bei 23°C an einer 40 μm Prüfblasfolie gemessen ist, der DDI die nach ISO 7765-1:1988 an einer 40 μm Prüfblasfolie bestimmte Dart-Drop-Schlagzähigkeit ist und die Trübung gemäß ASTM D1003 an einer 40 μm Prüfblasfolie gemessen ist.

**15.** Verwendung einer Folie bzw. Lage nach einem der vorhergehenden Ansprüche 13 bis 14 als Verpackungsmaterial, insbesondere für Sekundärverpackungen, die keine Lebensmittelzulassung erfordern, oder für Primärverpackungen für Non-Food-Produkte.

## Revendications

**1.** Une composition comprenant

(I) 1,0 à 49,0 % en poids, par rapport à la composition totale, d'un polyéthylène haute densité (PEHD) multimodal, dans laquelle le PEHD multimodal a une densité (ASTM D792) comprise entre 948 et 970 kg/m$^3$ et un $MFR_2$ (190°C, 2,16 kg, ISO 1133) de 0,1 à 3,0 g/10 min et dans laquelle le PEHD multimodal comprend au moins

(i) 30 à 70 % en poids, par rapport au poids total du PEHD multimodal, d'un composant de polyéthylène (A) ayant une densité (ASTM D792) comprise entre 955 et 980 kg/$m^3$ et un $MFR_2$ (190°C, 2,16 kg, ISO 1133) de 10 à 1000 g/10 min ; et

(ii) 30 à 70 % en poids, par rapport au poids total du PEHD multimodal, d'un composant de polyéthylène (B) étant un polyéthylène ayant une densité (ASTM D792) comprise entre 935 et 965 kg/$m^3$ et un $MFR_2$ (190°C, 2,16 kg, ISO 1133) de 0,0001 à 1,0 g/10 min ; et

(II) 51,0 à 99,0 % en poids, par rapport à la composition totale, d'un mélange de recyclage plastique-polyéthylène mixte (PERB) ayant un $MFR_2$ (ISO 1133, 2,16 kg, 190°C) de 0,1 à 1,2 g/10 min,
une densité (ASTM D792) de 910 à 945 kg/$m^3$ ; et
une quantité totale d'unités d'éthylène (unités C2) de 80,0 à 96,0 % en poids, mesurée par RMN de la fraction soluble dans le d2-tétrachloroéthylène,
la quantité totale d'unités C2 étant basée sur la quantité du poids total d'unités monomères dans le mélange plastique-polyéthylène mixte (B) et mesurée selon une mesure quantitative par $^{13}C\{1H\}$ NMR.

**2.** Composition selon la revendication 1, dans laquelle le PEHD multimodal présente

un $MFR_2$ compris entre 0,3 et 2,5 g/10 min, préférablement entre 0,5 et 2,0 g/10min et plus préférablement entre 0,6 et 1,5 g/10min et/ou
un $MFR_{21}$ (190°C, 21,6 kg, ISO 1133) compris entre 15 et 80 g/10min, préférablement entre 20 et 75 g/10min et plus préférablement entre 25 et 65 g/10min et/ou
un rapport de débit (FRR) de la $MFR_{21}/MFR_2$ compris entre au moins 26,0 et 80,0, préférablement entre au moins 28,0 et 75,0 et plus préférablement entre au moins 30,0 et 70,0.

**3.** La composition selon la revendication 1 ou 2, dans laquelle, dans le PEHD multimodal, le composant polyéthylène (A) est un homopolymère d'éthylène et le composant polyéthylène (B) est un copolymère d'éthylène, où comme comonomère pour le composant polyéthylène (B) on utilise du 1-butène, du 1-hexène ou du 1-octène, plus préférablement du 1-butène.

**4.** La composition selon la revendication 3, dans laquelle

le composant polyéthylène (A) a un $MFR_2$ de 100 à 1000 g/10min, préférablement de 150 à 800 g/10min, plus préférablement de 200 à 600 g/10min et encore plus préférablement de 250 à 500 g/10min et/ou
une densité (ASTM D792) comprise entre 960 et 980 kg/$m^3$, plus préférablement entre 965 et 978 kg/$m^3$ et encore plus préférablement entre 968 et 975 kg/$m^3$; et/ou
le composant polyéthylène (B) a un $MFR_2$ de 0,0005 à 0,5 g/10min, préférablement de 0,0008 à 0,1 g/10min et plus préférablement de 0,001 à 0,05 g/10min ; et/ou
une densité (ASTM D792) comprise entre 938 et 955 kg/$m^3$ et préférablement entre 940 et 950 kg/$m^3$.

**5.** Composition selon la revendication 3 ou 4, dans laquelle le PEHD multimodal est produit dans un processus de polymérisation en deux étapes utilisant un système catalytique Ziegler Natta.

**6.** La composition selon la revendication 1 ou 2, dans laquelle dans le PEHD multimodal le composant polyéthylène (A) est un copolymère d'éthylène où comme comonomère pour le composant polyéthylène (A) 1-butène, 1-hexène ou 1-octène, plus préférablement 1-butène est utilisé et le composant polyéthylène (B) est un homopolymère d'éthylène, le composant polyéthylène (A) pouvant être constitué d'un seul copolymère d'éthylène ou d'un mélange de copolymères d'éthylène comprenant, préférablement, une première fraction de copolymère d'éthylène (A-1) et une deuxième fraction de copolymère d'éthylène (A-2).

**7.** Composition selon la revendication 6, dans laquelle dans le PEHD multimodal le composant polyéthylène (A) a un $MFR_2$ compris entre 10 et 400 g/10min, préférablement entre 12 et 200 g/10min, plus préférablement entre 15 et 100 g/10min et le plus préférablement entre 20 et 50 g/10 min et une densité (ASTM D792) comprise entre 955 et 970 kg/$m^3$, préférablement entre 958 et 968 kg/$m^3$ et plus préférablement encore entre 960 et 965 kg/$m^3$; et,

dans le cas où le composant de polyéthylène (A) est constitué d'une première fraction de copolymère d'éthylène (A-1) et d'une deuxième fraction de copolymère d'éthylène (A-2), le $MFR_2$ et/ou la densité des fractions (A-1) et (A-2) peuvent être identiques ou différents l'un de l'autre, dans laquelle
la fraction de polymère d'éthylène (A-1) a un $MFR_2$ (190°C, 2,16 kg, ISO 1133) compris entre 1,0 et 80,0 g/10

min, préférablement entre 5,0 et 40,0 g/10 min, plus préférablement entre 8,0 et 30,0 g/10 min et encore plus préférablement entre 10,0 et 25,0 g/10 min et
une densité (ASTM D792) comprise entre 945 et 970 kg/$m^3$, préférablement entre 950 et 965 kg/$m^3$ et encore plus préférablement entre 952 et 962 kg/$m^3$; et
la fraction de polymère d'éthylène (A-2) a un $MFR_2$ (190°C, 2,16 kg, ISO 1133) compris entre 10,0 et 200,0 g/10min, préférablement entre 15,0 et 150,0 g/10min, plus préférablement entre 20,0 et 100,0 g/10min et le plus préférablement entre 25,0 et 60,0 g/10min, et
une densité (ASTM D792) comprise entre 950 et 980 kg/$m^3$, préférablement entre 955 et 975 kg/$m^3$ et plus préférablement entre 960 et 970 kg/$m^3$; et/ou
le composant polyéthylène (B) a un MFR2 compris entre 0,01 et 1,0 g/10min, préférablement entre 0,02 et 0,8 g/10min, et plus préférablement entre 0,05 et 0,5 g/10min et
une densité (ASTM D792) comprise entre 945 et 965 kg/$m^3$, préférablement entre 948 et 962 kg/$m^3$ et plus préférablement entre 950 et 960 kg/$m^3$.

**8.** Composition selon la revendication 6 ou 7, dans laquelle le PEHD multimodal est préparé dans un processus de polymérisation en deux ou trois étapes utilisant un système catalytique métallocène.

**9.** La composition selon l'une quelconque des revendications précédentes, dans laquelle le mélange de recyclage plastique-polyéthylène mixte (PERB) comprend une quantité totale d'unités d'éthylène (unités C2) de 80,0 % en poids à 96,0 % en poids, plus préférablement de 82,5 % en poids à 95,5 % en poids, encore plus préférablement de 85,0 % en poids à 95,5 % en poids et le plus préférablement de 87,5 % en poids à 95,0 % en poids ;
une quantité totale d'unités continues ayant 3 atomes de carbone correspondant au polypropylène (unités C3 continues) de 0,2 à 6,5 % en poids, plus préférablement de 0,4 % en poids à 6,0 % en poids, encore plus préférablement de 0,6 % en poids à 5,5 % en poids et le plus préférablement de 0,75 % en poids à 5,0 % en poids ; les quantités totales d'unités C2 et d'unités C3 continues ainsi sont basées sur la quantité du poids totale d'unités monomères dans le mélange de recyclage plastique-polyéthylène (PERB) et sont mesurées selon une mesure quantitative de $^{13}C\{^1H\}$ NMR.

**10.** La composition selon l'une quelconque des revendications précédentes, dans laquelle le mélange de recyclage plastique-polyéthylène (PERB) comprend préférablement un ou plusieurs dans n'importe quelle combinaison, préférablement tous les éléments suivants :

une quantité totale d'unités ayant 3 atomes de carbone en tant qu'unités C3 isolées (unités C3 isolées) de 0,00 % en poids à 0,50 % en poids, plus préférablement de 0,00 % en poids à 0,40 % en poids, encore plus préférablement de 0,00 % en poids à 0,30 % en poids et le plus préférablement de 0,00 % en poids à 0,25 % en poids ;
une quantité totale d'unités ayant 4 atomes de carbone (unités C4) de 0,50 à 5,00 % en poids, plus préférablement de 0,75 % en poids à 4,00 % en poids, plus préférablement encore de 1,00 % en poids à 3,50 % en poids et le plus préférablement de 1,25 % en poids à 3,00 % en poids ;
une quantité totale d'unités ayant 6 atomes de carbone (unités C6) de 0,50 à 7,50 % en poids, plus préférablement de 0,75 % en poids à 6,50 % en poids, plus préférablement encore de 1,00 % en poids à 5,50 % en poids et le plus préférablement de 1,25 % en poids à 5,00 % en poids ;
une quantité totale d'unités ayant 7 atomes de carbone (unités C7) de 0,20 % en poids à 2,50 % en poids, de 0,30 % en poids à 2,00 % en poids, plus préférablement de 0,40 % à 1,50 % en poids et le plus préférablement de 0,45 % en poids à 1,25 % en poids, et
une teneur en LDPE de 20,0 à 65,0 % en poids, plus préférablement de 25,0 à 62,5 % en poids, plus préférablement encore de 30,0 à 60,0 % en poids et le plus préférablement de 32,0 à 55,0 % en poids ; les quantités totales d'unités C2, d'unités C3 continues, d'unités C3 isolées, d'unités C4, d'unités C6, d'unités C7 et la teneur en LDPE ainsi sont basées sur la quantité de poids totale d'unités monomères dans le mélange de recyclage plastique-polyéthylène (PERB) et sont mesurées ou calculées selon une mesure quantitative par $^{13}C\{^1H\}$ NMR.
[1] Translator's note: tensile modulus = module de traction

**11.** La composition selon l'une des revendications précédentes, dans laquelle le mélange de recyclage plastique-polyéthylène (PERB) a

un $MFR_2$ (ISO 1133, 2,16 kg, 190 °C) compris entre 0,2 et 1,1 g/10 min ; et/ou
une densité (ASTM D792) comprise entre 915 et 942 kg/$m^3$, préférablement entre 918 et 940 kg/$m^3$.

**12.** La composition selon l'une des revendications précédentes, dans laquelle la composition consiste en .

(I) 10,0 à 45,0 % en poids et préférablement 20,0 à 40,0 % en poids de polyéthylène haute densité (PEHD) multimodal, et
(II) 55,0 à 90,0 % en poids et préférablement 60,0 à 80,0 % en poids du mélange de recyclage plastique-polyéthylène (PERB).

**13.** Film comprenant une composition selon l'une quelconque des revendications précédentes 1 à 12.

**14.** Film selon la revendication 13, dans lequel le film est **caractérisé par** une capacité optomécanique (OMA) selon la formule (I) :

$$OMA = \frac{Tensile\ Modulus\ (MD)[MPa] * DDI(g)}{Haze\ (40\ \mu m)[\%]}$$

déterminée sur un film soufflé d'essai de 40 µm est d'au moins 1000 [MPa*g/%] jusqu'à 3000 [MPa*g/%], préférablement dans la plage de 1100 [MPa*g/%] jusqu'à 2500 [MPa*g/%], plus préférablement dans la plage de 1300 [MPa*g/%] jusqu'à 2000 [MPa*g/%], dans lequel le module de traction dans le sens machine est mesuré conformément à la norme ISO 527-3 à 23°C sur des films soufflés d'essai de 40 µm, DDI est la résistance à l'impact en goutte d'eau déterminée conformément à la norme ISO 7765-1 : 1988 sur un film soufflé test de 40 µm et le haze est mesuré selon la norme ASTM D1003 sur un film soufflé test de 40 µm.

**15.** Utilisation d'un film selon l'une des revendications précédentes 13 à 14 comme matériau d'emballage, en particulier pour les emballages secondaires, qui ne nécessitent pas d'agrément alimentaire ou pour les emballages primaires de produits non alimentaires.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021122299 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- WO 2016198273 A
- WO 2021009189 A
- WO 2021009190 A
- WO 2021009191 A
- WO 2021009192 A
- EP 2994506 A


### Non-patent literature cited in the description


- **PARKINSON, M. ; KLIMKE, K. ; SPIESS, H.W. ; WILHELM, M.** *Macromol. Chem. Phys.,* 2007, vol. 208, 2128
- **POLLARD, M ; KLIMKE, K. ; GRAF, R ; SPIESS, H.W. ; WILHELM, M. ; SPERBER, O ; PIEL, C. ; KAMINSKY, W.** *Macromolecules,* 2004, vol. 37, 813
- **FILIP, X ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem,* 2007, vol. 45, S1, , S198
- **CASTIGNOLLES, P. ; GRAF, R. ; PARKINSON, M ; WILHELM, M. ; GABORIEAU, M.** *Polymer,* 2009, vol. 50, 2373
- **BUSICO, V ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R ; QIU, X ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **ZHOU, Z. ; KUEMMERLE, R. ; QIU, X. ; REDWINE, D ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R ; PELLECCHIA, R. ; SEVERN, J. ; TALARICO, G.** *Macromol. Rapid Commun.,* 2007, vol. 28, 1128
- **SINGH, G. ; KOTHARI, A. ; GUPTA, V.** *Polymer Testing,* 2009, vol. 28 (5), 475
- **J. RANDALL.** *Macromol. Sci., Rev. Macromol. Chem. Phys.,* 1989, vol. C29, 201
- **A. J. BRANDOLINI ; D. D. HILLS.** NMR Spectra of Polymers and Polymer Additives. Marcel Dekker Inc, 2000
- **HEINO, E.L. ; LEHTINEN, A. ; TANNER J. ; SEPPÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY ; PORVOO, FINLAND.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754